# EUROPEAN PATENT APPLICATION

(11) **EP 4 814 347 A1**
(43) Date of publication of application: **30.09.2026**
(21) Application number: 26167316.4
(22) Date of filing: 24.03.2026
(51) Int. Cl.: F16K 1/12, F16K 31/122, F16K 31/124, F16K 15/18, F16K 31/383, F16K 31/40

(54) **SHUT-OFF VALVE, IN PARTICULAR FOR SHUTTING OFF GAS**

(30) Priority: 27.03.2025 IT 202500006480
(71) Applicant: CIMBERIO HOLDING S.r.l., 20145 Milano (IT)
(72) Inventor: CIMBERIO, Roberto, 28010 AMENO FRAZ. VACCIAGO (NO) (IT); GUIDETTI, Tiziano, 28021 BORGOMANERO (NO) (IT); CHIARELLO, Andrea, 28040 OLEGGIO CASTELLO (NO) (IT); TADINI, Alessandro, 28012 Cressa (NO) (IT)
(74) Representative: PGA S.p.A.

(57) **Abstract**

The present invention relates to shut-off valve (1), particularly for shutting off pressurized gas, comprising a main channel (2) running along a longitudinal axis (A-A) between an inlet opening (2a) and an outlet opening (2b); the main channel (2) has a first portion (3) extending between the inlet opening (2a) and a connecting opening (4), a second portion (5) extending between the connecting opening (4) and the outlet opening (2b); a shutter (6) is arranged in the main channel (2) at the second portion (5) and a chamber (7) is delimited at least by part of the shutter (6) and part of the second portion (5) of the main channel (2); a first passage (8) is in fluid communication with the first portion (3) of the main channel (2), and a second passage (9) in fluid communication with the chamber (7); a selector (10) is operationally associated with the first passage (8) and the second passage (9) and switchable between: an activation configuration, wherein the selector (10) isolates the first passage (8) and the second passage (9) from each other, and a deactivation configuration, wherein the selector (10) allows a fluid communication between the first passage (8) and the second passage (9). A pneumatic circuit (100) using the above shut-off valve is also described.

## Description

### Field of the invention

The invention relates to the sector of fluid valves and, more in detail, concerns a shut-off valve for example for pneumatic circuits. In the context of the present description and in the claims the shut-off valve takes a closed position and at least one open position. Note that it is not excluded that the shut off valve may take more than one open position.

### Background art

The use of shut-off valves within industrial and domestic fluid distribution systems, and in particular pressurized gas, such as air, is known in the prior art.

The main function of a shut-off valve is to control the passage of fluid within the system, for example from one or more sources of pressurized fluid (for example one or more gas compressors, such as air compressors) towards one or more user devices. Shut-off valves generally operate in at least one closed condition, in which they hinder the passage of the fluid/gas, and in at least one open condition, in which they allow passage of the same fluid/gas.

One type of shut-off valve comprises a solenoid as an actuator for controlling the opening and closure of the fluid flow. The operation of such valves provides that the solenoid, when electrically energized, attracts a ferrous core, causing the displacement of an occluding element. This movement allows the opening or closure of the valve, thereby controlling the flow of the fluid.

Solenoid shut-off valves have disadvantages due to the need to electrically power the solenoid in order to act on the opening and closure of the flow. Consequently, damage to the solenoid or a lack of electrical power supply could lead the relevant valve to operate in undesired or unsafe conditions, for example by leaving the fluid flow permanently open.

French patent application published as FR2893379A1 also discloses a coaxial shut-off valve for compressed-air systems, comprising a valve body with a coaxial inlet and outlet; the valve body is formed by an intermediate tubular element and by two sleeves positioned at opposite ends of the intermediate tubular element; in a central chamber interposed between inlet and outlet there is housed an axially perforated shut-off piston movable between a closed position and an open position. A radially outer flange of the piston, in the closed condition, cooperates with the intermediate tubular element and with the inlet sleeve, defining a first compartment radially external to the inlet sleeve; in the open condition, the same flange cooperates with the intermediate tubular element and with the outlet sleeve, defining a second compartment radially external to the outlet sleeve; radial openings on the inlet sleeve place the inlet sleeve in communication with the aforesaid first compartment: when the piston passes into the open condition, the first compartment is placed in fluid communication with an inner channel of the piston and thus with the inner passage of the outlet sleeve, thereby establishing a communication between the inlet and outlet of the valve. Finally, at the wall of the intermediate tubular element there are provided a first channel communicating with the first compartment and a second channel communicating with the second compartment. Pressurized fluid can be directed from the first channel to the second channel by a valve in order to equalize the pressure between the first and second compartments so that a spring operating in the second compartment can push the piston into the closed position.

The coaxial valve just described has structural complexity, considerable radial overall dimensions, and moreover entails a fluid motion that deviates substantially from the axial trajectory, causing turbulence; finally, the coaxial valve just described has poor operational safety, since the connection between the first and second compartments through the first and second channels is allowed only in the presence of electrical energy for controlling the solenoid valve.

### Objects of the invention

In light of the above discussion, an object of the invention is to provide a shut-off valve characterized by increased safety in use.

A further object of the present invention is to provide a shut-off valve that makes it possible to minimize pressure losses and turbulence of the fluid flow passing through the valve.

A further object of the present invention is to provide a shut-off valve that reduces the need for flow straighteners downstream of the shutter.

It is also an object of the present invention to provide a valve with a shutter having reduced radial overall dimensions and allowing minimization of changes in the trajectory of the passing fluid flow.

In particular, a further object of the present invention is to provide a shutter for shut-off valves that allows efficient channeling of the fluid and a reduction of turbulence downstream of the shutter itself.

An additional object of the present invention is to provide a shut-off valve that makes it possible to increase the speed and efficiency of opening of the valve.

Finally, an object of the invention is to provide a coaxial shut-off valve (that is, with opposed and aligned inlet and outlet) having a simplified valve body made of only two parts.

### Summary

One or more of the above objects are substantially achieved by a shut-off valve according to any one of the appended claims.

Further aspects of the invention are described below.

A 1st aspect concerns a shut-off valve, optionally for shutting off a pressurized gas, comprising:
- a main channel extending along a longitudinal axis between an inlet opening and an outlet opening, the main channel comprising:
   ∘ a first portion extending between the inlet opening and a connecting opening,
   ∘ a second portion extending between the connecting opening and the outlet opening,
- a shutter arranged in the main channel at the second portion, the shutter being movable along the longitudinal axis between:
   ∘ an open position, in which the shutter is spaced from the connecting opening and in which the inlet opening and the outlet opening are in fluid communication with each other, and
   ∘ a closed position, in which the shutter closes the connecting opening and in which the inlet opening and the outlet opening are isolated from each other,
- a chamber delimited at least by part of the shutter and by part of the second portion of the main channel,
- a first passage in fluid communication with the first portion of the main channel,
- a second passage in fluid communication with the chamber,
- a selector operatively associated with the first passage and the second passage and switchable between:
   ∘ an activation configuration, in which the selector isolates the first passage and the second passage from each other, and
   ∘ a deactivation configuration, in which the selector allows fluid communication between the first passage and the second passage.

In a 2nd aspect according to the preceding aspect, in the activation configuration the selector closes the first passage, which therefore communicates exclusively with the first portion of the main channel, and places the second passage in fluid communication with an environment external to the shut-off valve, thereby establishing fluid communication between said chamber and said external environment.

In a 3rd aspect according to the preceding aspect, the environment external to the valve is at a predefined pressure or at atmospheric pressure.

In a 4th aspect according to any one of the preceding aspects, the main channel comprises a first shoulder at the connecting opening.

In a 5th aspect according to the preceding aspect, at the first shoulder the main channel has an increase in its passage cross-section.

In a 6th aspect according to any one of the two preceding aspects, in the closed position, the shutter abuts against the first shoulder.

In a 7th aspect according to any one of aspects from the 4th to the 6th, in the open position, the shutter is spaced from the first shoulder.

In an 8th aspect according to any one of the preceding aspects, the shutter comprises a head movable along the longitudinal axis.

In a 9th aspect according to the preceding aspect, in the closed position of the shutter, the head engages and sealingly seals the connecting opening.

In a 10th aspect according to any one of the two preceding aspects, in the open position of the shutter, the head disengages the connecting opening, allowing fluid to pass therethrough.

In an 11th aspect according to any one of aspects from the 8th to 10th, the head of the shutter comprises a front portion extending along the longitudinal axis.

In a 12th aspect according to the preceding aspect, in the closed position of the shutter the front portion engages the connecting opening and projects into the first portion of the main channel.

In a 13th aspect according to any one of the two preceding aspects, the front portion of the head has an ogive shape.

In a 14th aspect according to any one of aspects from the 11th to 13th, the head comprises a base projecting radially from the front portion, thereby defining a peripheral sealing lip.

In a 15th aspect according to the preceding aspect and at least according to the 4th aspect, in the closed position, the base, and optionally the peripheral sealing lip thereof, abuts against the first shoulder.

In a 16th aspect according to any one of the two preceding aspects and at least according to the 4th aspect, in the open position, the base, and optionally the peripheral sealing lip thereof, is spaced from the first shoulder.

In a 17th aspect according to any one of the preceding aspects, the shutter comprises a main body defining an internal channel extending radially from the longitudinal axis and along the latter between an inlet passage and an outlet passage.

In an 18th aspect according to the preceding aspect, when the shutter is in the open position, the inlet passage is in fluid communication with a transfer volume of the second portion of the main channel and with the connecting opening.

In a 19th aspect according to the preceding aspect, the transfer volume is arranged downstream of the connecting opening and isolated from the chamber.

In a 20th aspect according to any one of the three preceding aspects, the outlet passage is constantly in fluid communication with the outlet opening of the main channel.

In a 21st aspect according to any one of the four preceding aspects and at least according to the 8th aspect, the main body of the shutter is constrained to the head.

In a 22nd aspect according to any one of the five preceding aspects, the main body comprises a front support wall extending radially with respect to the longitudinal axis.

In a 23rd aspect according to the preceding aspect, the front support wall extends perpendicularly with respect to the longitudinal axis.

In a 24th aspect according to any one of the two preceding aspects and at least according to the 8th aspect, the main body is constrained to the head at the front support wall.

In a 25th aspect according to any one of the three preceding aspects, the main body comprises a connecting element projecting from the front support wall along the longitudinal axis.

In a 26th aspect according to the preceding aspect and at least according to the 8th aspect, the base of the head comprises a seat configured to receive and constrain the connecting element.

In a 27th aspect according to the preceding aspect, the connecting element comprises a stem and a distal enlargement, carried by the stem and having a radial overall dimension greater than that of the stem itself, intended to snap-fit into an undercut seat provided in said head of the shutter.

In a 28th aspect according to any one of aspects from 17th to the 27th, the main body comprises a plurality of radial openings arranged angularly spaced apart from each other around the longitudinal axis.

In a 29th aspect according to the preceding aspect, the inlet passage of the internal channel is defined by the plurality of radial openings.

In a 30th aspect according to any one of aspects from the 17th to 29th, the main body comprises a plurality of guiding elements angularly spaced apart from each other around the longitudinal axis.

In a 31st aspect according to the preceding aspect, each guiding element extends along or parallel to the longitudinal axis and radially with respect to the latter.

In a 32nd aspect according to any one of the two preceding aspects, each guiding element is shaped as a blade oriented parallel to the longitudinal axis.

In a 33rd aspect according to any one of the three preceding aspects and at least according to the 28th aspect, each guiding element is configured to direct an incident fluid flow towards one of said radial openings. In a 34th aspect according to any one of the four preceding aspects and at least according to the 28th aspect, each radial opening is arranged between two adjacent guiding elements and extends circumferentially at a preset distance from the longitudinal axis.

In a 35th aspect according to any one of aspects from the 17th to 34th, the main body comprises an annular flange projecting radially towards an inner wall of the second portion of the main channel.

In a 36th aspect according to the preceding aspect, the annular flange delimits a first annular seat.

In a 37th aspect according to the preceding aspect, the shutter comprises a first sealing element, optionally an O-ring, constrained in the first annular seat.

In a 38th aspect according to the preceding aspect, the first sealing element is configured to provide, at the annular flange, a sealing sliding coupling between the shutter and the inner wall of the second portion of the main channel.

In a 39th aspect according to any one of the preceding aspects and at least according to the 17th aspect, the main body and the inner wall delimit the chamber at least in part.

In a 40th aspect according to any one of the preceding aspects, an internal volume of the chamber decreases during movement of the shutter from the closed position to the open position and increases during movement of the shutter from the open position to the closed position.

In a 41st aspect according to any one of the preceding aspects, the shutter comprises a second sealing element, optionally a second O-ring.

In a 42nd aspect according to any one of the preceding aspects, the shutter comprises a guiding body constrained to the second portion of the main channel and slidably connected to the main body.

In a 43rd aspect according to the preceding aspect and at least according to the 17th aspect, the guiding body is fitted on the main body and is adapted to guide movement of the main body along the longitudinal axis.

In a 44th aspect according to the preceding aspect, the guiding body comprises a second annular seat facing the main body.

In a 45th aspect according to the preceding aspect and at least according to the 41st aspect, the second sealing element is constrained in the second annular seat.

In a 46th aspect according to the preceding aspect, the second sealing element is configured to provide a sealing sliding coupling between the main body and the guiding body.

In a 47th aspect according to any one of the five preceding aspects, the guiding body contacts the inner wall of the second portion of the main channel and cooperates in delimiting the chamber at least in part.

In a 48th aspect according to any one of the six preceding aspects and at least according to the 17th aspect, the chamber is delimited by the main body, by part of the inner wall of the second portion of the main channel, and by the guiding body.

In a 49th aspect according to any one of the preceding aspects and at least according to the 4th aspect, the main channel comprises a second shoulder axially spaced apart from the first shoulder.

In a 50th aspect according to the preceding aspect, at the second shoulder the main channel has a reduction in its passage cross-section, thereby defining a transition between an upstream section and a downstream section of the second portion of the main channel.

In a 51st aspect according to any one of the two preceding aspects and at least according to the 42nd aspect, the guiding body is constrained to the main channel at the second shoulder.

In a 52nd aspect according to any one of the three preceding aspects, the guiding body comprises a third annular seat facing the second shoulder of the second portion of the main channel.

In a 53rd aspect according to any one of the preceding aspects, the shutter comprises a third sealing element, optionally a third O-ring, constrained in the third annular seat and projecting at least in part therefrom.

In a 54th aspect according to the preceding aspect and at least according to the 42nd and 49th aspects, the third sealing element is configured to provide a sealing coupling between the guiding body and the second shoulder of the second portion.

In a 55th aspect according to any one of the aspects and at least according to the 17th and 42nd aspects, the main body and the guiding body respectively comprise a first and a second annular abutment surface transverse to said longitudinal axis and facing each other.

In a 56th aspect according to the preceding aspect and at least according to the 35th aspect, the first annular abutment surface is defined by the annular flange.

In a 57th aspect according to any one of the two preceding aspects, the shutter comprises an elastic element arranged between the first and the second annular abutment surfaces.

In a 58th aspect according to the preceding aspect, the elastic element is preloaded and adapted to exert an elastic thrust force on the main body directed along or parallel to said longitudinal axis and oriented so as to urge the shutter, optionally the/a head of the shutter, towards closure of the connecting opening.

In a 59th aspect according to any one of the two preceding aspects, the elastic element extends along the longitudinal axis between one end constrained to the first annular abutment surface and an opposite end constrained to the second annular abutment surface.

In a 60th aspect according to any one of the three preceding aspects, the elastic element compresses during movement of the shutter from the closed position to the open position and extends during movement of the shutter from the open position to the closed position.

In a 61st aspect according to any one of the four preceding aspects, the elastic element is arranged inside the chamber.

In a 62nd aspect according to any one of the preceding aspects, the selector is configured to selectively isolate the first passage and the second passage from each other or place the first passage and the second passage in fluid communication with each other.

In a 63rd aspect according to any one of the preceding aspects, the selector (10) is configured to normally assume said deactivated configuration in the absence of actuating energy. The actuating energy may be pneumatic, hydraulic, electric, or of another nature. In the illustrated examples, the selector is of the type controlled by a solenoid and, in the absence of electrical energization to the solenoid, is normally positioned in said deactivated configuration.

In a 64th aspect according to any one of the preceding aspects, the valve comprises power supply means configured to receive electrical energy from a battery and/or from an electrical mains and electrically connected to said selector so as to supply electrical energy thereto.

In a 65th aspect according to any one of the preceding aspects, the inlet opening, the outlet opening, and the connecting opening are coaxial with each other.

In a 66th aspect according to any one of the preceding aspects, the solenoid comprises a main unit fixed to the valve body and defining a communication channel between the first passage and the second passage. In a 67th aspect according to any one of the preceding aspects, a downstream section of the second portion of the main channel accommodates a preset number of transducer elements of respective sensors.

In a 68th aspect according to the preceding aspect, said preset number of transducer elements comprises one or more of the following:
a pressure transducer,
a temperature transducer,
a humidity transducer,
a flow rate transducer.

In a 69th aspect according to any one of the two preceding aspects, each of said transducers is connected to a control electronic board supported by or housed in the valve body.

In a 70th aspect according to any one of the two preceding aspects, said one or more transducer elements operate at a distance from the connecting opening which is at least 2, optionally from 3 to 10 times, the diameter or the maximum radial dimension of the connecting opening.

In a 71st aspect according to any one of the preceding aspects, no flow straighteners are present downstream of the shutter, and optionally between the shutter and the transducer elements.

In a 72nd aspect according to any one of the preceding aspects, the main channel, from the inlet opening to the outlet opening, has a markedly elongated shape and an overall longitudinal extent equal to at least 4 times the maximum radial extent of the inlet opening.

In a 73rd aspect according to any one of the preceding aspects, the main channel, from the inlet opening to the outlet opening, has a markedly elongated shape and an overall longitudinal extent comprised between 5 and 10 times the maximum radial extent of the inlet opening.

A 74th aspect concerns a pneumatic circuit comprising:
a pressurized gas source,
a gas distribution circuit configured to be placed in fluid communication with the gas supply source,
a preset number of user devices, each configured to be placed in fluid communication with at least one respective gas supply line forming part of the distribution circuit, and
a shut-off valve according to any one of the preceding aspects interposed between each gas supply line and the respective user device.

In a 75th aspect according to the preceding aspect, the pressurized gas source comprises a preset number of compressors.

A 76th aspect concerns a shut-off valve, optionally for shutting off a pressurized gas, comprising:
- a main channel extending along a longitudinal axis between an inlet opening and an outlet opening, the main channel comprising:
   ∘ a first portion extending between the inlet opening and a connecting opening,
   ∘ a second portion extending between the connecting opening and the outlet opening,
- a shutter arranged in the main channel at the second portion, the shutter being movable along the longitudinal axis between:
   ∘ an open position, in which the shutter is spaced from the connecting opening and in which the inlet opening and the outlet opening are in fluid communication with each other, and
   ∘ a closed position, in which the shutter closes the connecting opening and in which the inlet opening and the outlet opening are isolated from each other, and
wherein the shutter comprises a head movable along the longitudinal axis, wherein:
in the closed position of the shutter, the head engages and sealingly seals the connecting opening,
in the open position of the shutter, the head disengages the connecting opening, allowing fluid to pass therethrough.

In a 77th aspect according to the preceding aspect, the head of the shutter comprises a front portion extending along the longitudinal axis, wherein in the closed position of the shutter the front portion engages the connecting opening and projects into the first portion of the main channel.

In a 78th aspect according to the preceding aspect, the front portion of the head has an ogive shape.

In a 79th aspect according to any one of the three preceding aspects, the main channel comprises a first shoulder at the connecting opening.

In an 80th aspect according to the preceding aspect, at the first shoulder the main channel has an increase in its passage cross-section.

In an 81st aspect according to any one of the two preceding aspects, in the closed position, the shutter abuts against the first shoulder and, in the open position, the shutter is spaced from the first shoulder.

In an 82nd aspect according to any one of aspects from the 76th to the 81st, the head comprises a base projecting radially from the front portion, thereby defining a peripheral sealing lip.

In an 83rd aspect according to the preceding aspect and at least according to the 79th aspect, in the closed position, the base, and optionally the peripheral sealing lip thereof, abuts against the first shoulder and, in the open position, the base, and optionally the peripheral sealing lip thereof, is spaced from the first shoulder. In an 84th aspect according to any one of aspects from the 76th to 83rd, the valve comprises a chamber delimited at least by part of the shutter and by part of the second portion of the main channel.

In an 85th aspect according to any one of aspects from the 76th to 84th, the shutter comprises a main body defining an internal channel extending radially from the longitudinal axis and along the latter between an inlet passage and an outlet passage.

In an 86th aspect according to the preceding aspect, when the shutter is in the open position, the inlet passage is in fluid communication with a transfer volume of the second portion of the main channel and with the connecting opening.

In an 87th aspect according to the preceding aspect and at least according to the 84th aspect, the transfer volume is arranged downstream of the connecting opening and isolated from the chamber.

In an 88th aspect according to any one of the three preceding aspects, the outlet passage is constantly in fluid communication with the outlet opening of the main channel.

In an 89th aspect according to any one of the four preceding aspects, the main body of the shutter is constrained to the head.

In a 90th aspect according to any one of the five preceding aspects, the main body comprises a front support wall extending radially with respect to the longitudinal axis.

In a 91st aspect according to the preceding aspect, the front support wall extends perpendicularly with respect to the longitudinal axis.

In a 92nd aspect according to any one of the two preceding aspects, the main body is constrained to the head at the front support wall.

In a 93rd aspect according to any one of the three preceding aspects, the main body comprises a connecting element projecting from the front support wall along the longitudinal axis.

In a 94th aspect according to the preceding aspect and at least according to the 90th aspect, the base of the head comprises a seat configured to receive and constrain the connecting element.

In a 95th aspect according to the preceding aspect, the connecting element comprises a stem and a distal enlargement, carried by the stem and having a radial overall dimension greater than that of the stem itself, intended to snap-fit into an undercut seat provided in said head of the shutter.

In a 96th aspect according to any one of aspects from the 85th to the 95th, the main body comprises a plurality of radial openings arranged angularly spaced apart from each other around the longitudinal axis.

In a 97th aspect according to the preceding aspect, the inlet passage of the internal channel is defined by the plurality of radial openings.

In a 98th aspect according to any one of aspects from the 85th to 97th, the main body comprises a plurality of guiding elements angularly spaced apart from each other around the longitudinal axis.

In a 99th aspect according to the preceding aspect, each guiding element extends along or parallel to the longitudinal axis and radially with respect to the latter.

In a 100th aspect according to any one of the two preceding aspects, each guiding element is shaped as a blade oriented parallel to the longitudinal axis.

In a 101st aspect according to any one of the three preceding aspects and at least according to the 96th aspect, each guiding element is configured to direct an incident fluid flow towards one of said radial openings. In a 102nd aspect according to any one of the four preceding aspects and at least according to the 96th aspect, each radial opening is arranged between two adjacent guiding elements and extends circumferentially at a preset distance from the longitudinal axis.

In a 103rd aspect according to any one of aspects from the 85th to the 102nd, the main body comprises an annular flange projecting radially towards an inner wall of the second portion of the main channel.

In a 104th aspect according to the preceding aspect, the annular flange delimits a first annular seat.

In a 105th aspect according to the preceding aspect, the shutter comprises a first sealing element, optionally a first O-ring, constrained in the first annular seat.

In a 106th aspect according to any one of the four preceding aspects, the first sealing element is configured to provide, at the annular flange, a sealing sliding coupling between the shutter and the inner wall of the second portion of the main channel.

In a 107th aspect according to any one of aspects from the 76th to the 106th and at least according to the 84th and 85th aspects, the main body and the inner wall delimit the chamber at least in part.

In a 108th aspect according to any one of aspects from the 76th to the 107th and at least according to the 84th aspect, an internal volume of the chamber decreases during movement of the shutter from the closed position to the open position and increases during movement of the shutter from the open position to the closed position.

In a 109th aspect according to any one of aspects from the 76th to the 108th, the shutter comprises a second sealing element, optionally a second O-ring.

In a 110th aspect according to any one of aspects from the 76th to the 109th, the shutter comprises a guiding body constrained to the second portion of the main channel and slidably connected to the main body.

In a 111th aspect according to the preceding aspect and at least according to the 85th aspect, the guiding body is fitted on the main body and is adapted to guide movement of the main body along the longitudinal axis.

In a 112th aspect according to the preceding aspect, the guiding body comprises a second annular seat facing the main body.

In a 113th aspect according to the preceding aspect and at least according to the 109th aspect, the second sealing element is constrained in the second annular seat.

In a 114th aspect according to the preceding aspect, the second sealing element is configured to provide a sealing sliding coupling between the main body and the guiding body.

In a 115th aspect according to any one of aspects from the 76th to the 114th and at least according to the 85th and 110th aspects, the main body and the guiding body respectively comprise a first and a second annular abutment surface transverse to said longitudinal axis and facing each other.

In a 116th aspect according to the preceding aspect and at least according to the 103rd aspect, the first annular abutment surface is defined by the annular flange.

In a 117th aspect according to any one of the two preceding aspects, the shutter comprises an elastic element arranged between the first and the second annular abutment surfaces.

In a 118th aspect according to the preceding aspect, the elastic element is preloaded and adapted to exert an elastic thrust force on the main body directed along or parallel to said longitudinal axis and oriented so as to urge the shutter, optionally the/a head of the shutter, towards closure of the connecting opening.

In a 119th aspect according to any one of the two preceding aspects, the elastic element extends along the longitudinal axis between one end constrained to the first annular abutment surface and an opposite end constrained to the second annular abutment surface.

In a 120th aspect according to any one of the three preceding aspects, the elastic element compresses during movement of the shutter from the closed position to the open position and extends during movement of the shutter from the open position to the closed position.

In a 121st aspect according to any one of the four preceding aspects and at least according to the 84th aspect, the elastic element is arranged inside the chamber.

In a 122nd aspect according to any one of aspects from the 76th to the 121st, the inlet opening, the outlet opening, and the connecting opening are coaxial with each other.

In a 123rd aspect according to any one of aspects from the 76th to the 122nd and at least according to the 84th and 85th aspects, the guiding body contacts the inner wall of the second portion of the main channel and cooperates in delimiting the chamber at least in part.

In a 124th aspect according to any one of aspects from the 76th to the 123rd and at least according to aspects 84th, 85th and 110th, the chamber is delimited by the main body, by part of the inner wall of the second portion of the main channel, and by the guiding body.

In a 125th aspect according to any one of aspects from the 76th to the 124th and at least according to the 79th aspect, the main channel comprises a second shoulder axially spaced apart from the first shoulder.

In a 126th aspect according to the preceding aspect, at the second shoulder the main channel has a reduction in its passage cross-section, thereby defining a transition between an upstream section and a downstream section of the second portion of the main channel.

In a 127th aspect according to any one of the two preceding aspects and at least according to the 110th aspect, the guiding body is constrained to the main channel at the second shoulder.

In a 128th aspect according to any one of the three preceding aspects and at least according to the 110th aspect, the guiding body comprises a third annular seat facing the second shoulder of the second portion of the main channel.

In a 129th aspect according to any one of aspects from the 76th to the 128th, the shutter comprises a third sealing element, optionally a third O-ring, constrained in the third annular seat and projecting at least in part therefrom.

In a 130th aspect according to the preceding aspect and at least according to the 110th aspect, the third sealing element is configured to provide a sealing coupling between the guiding body and the second shoulder of the second portion.

In a 131st aspect according to any one of aspects from the 76th to the 130th and at least according to the 84th aspect, the valve comprises:
a first passage in fluid communication with the first portion of the main channel,
a second passage in fluid communication with the chamber,
a selector operatively associated with the first passage and the second passage and switchable between: an activation configuration, in which the selector isolates the first passage and the second passage from each other, and
a deactivation configuration, in which the selector allows fluid communication between the first passage and the second passage.

In a 132nd aspect according to the preceding aspect, in the activation configuration the selector closes the first passage, which therefore communicates exclusively with the first portion of the main channel, and places the second passage in fluid communication with an environment external to the shut-off valve, thereby establishing fluid communication between said chamber and said external environment.

In a 133rd aspect according to the preceding aspect, the environment external to the valve is at a predefined pressure or at atmospheric pressure.

In a 134th aspect according to any one of the three preceding aspects, the selector is configured to selectively isolate the first passage and the second passage from each other or place the first passage and the second passage in fluid communication with each other.

In a 135th aspect according to any one of the four preceding aspects, the selector (10) is configured to normally assume said deactivated configuration in the absence of actuating energy. The actuating energy may be pneumatic, hydraulic, electric, or of another nature. In the illustrated examples, the selector is of the type controlled by a solenoid, and in the absence of electrical energization to the solenoid, it normally assumes the deactivated configuration.

In a 136th aspect according to any one of the five preceding aspects, the solenoid comprises a main unit fixed to the valve body and defining a communication channel between the first passage and the second passage.

In a 137th aspect according to any one of the six preceding aspects, the valve comprises power supply means configured to receive electrical energy from a battery and/or from an electrical mains and electrically connected to said selector so as to supply electrical energy thereto.

In a 138th aspect according to any one of aspects from the 76th to the 137th, a downstream section of the second portion of the main channel accommodates a preset number of transducer elements of respective sensors.

In a 139th aspect according to the preceding aspect, said preset number of transducer elements comprises one or more of the following:
- a pressure transducer,
- a temperature transducer,
- a humidity transducer,
- a flow rate transducer.

In a 140th aspect according to any one of the two preceding aspects, each of said transducers is connected to a control electronic board supported by or housed in the valve body.

In a 141st aspect according to any one of the two preceding aspects, said one or more transducer elements operate at a distance from the connecting opening which is at least 2, optionally from 3 to 10 times, the diameter or the maximum radial dimension of the connecting opening.

In a 142nd aspect according to any one of aspects from the 76th to the 141st, no flow straighteners are present downstream of the shutter, and optionally between the shutter and the transducer elements.

In a 143rd aspect according to any one of aspects from the 76th to the 142nd, the main channel, from the inlet opening to the outlet opening, has a markedly elongated shape and an overall longitudinal extent equal to at least 4 times the maximum radial extent of the inlet opening.

In a 144th aspect according to any one of aspects from the 76th to the 143rd, the main channel, from the inlet opening to the outlet opening, has a markedly elongated shape and an overall longitudinal extent comprised between 5 and 10 times the maximum radial extent of the inlet opening.

### Description of the figures

Further features and advantages of the invention will be further described with reference to the appended figures, in which:
- Figure 1 represents a partially exploded perspective view of a shut-off valve according to an embodiment of the present invention;
- Figure 2 illustrates a sectional view of a detail of the shut-off valve of Figure 1 along axis II-II;

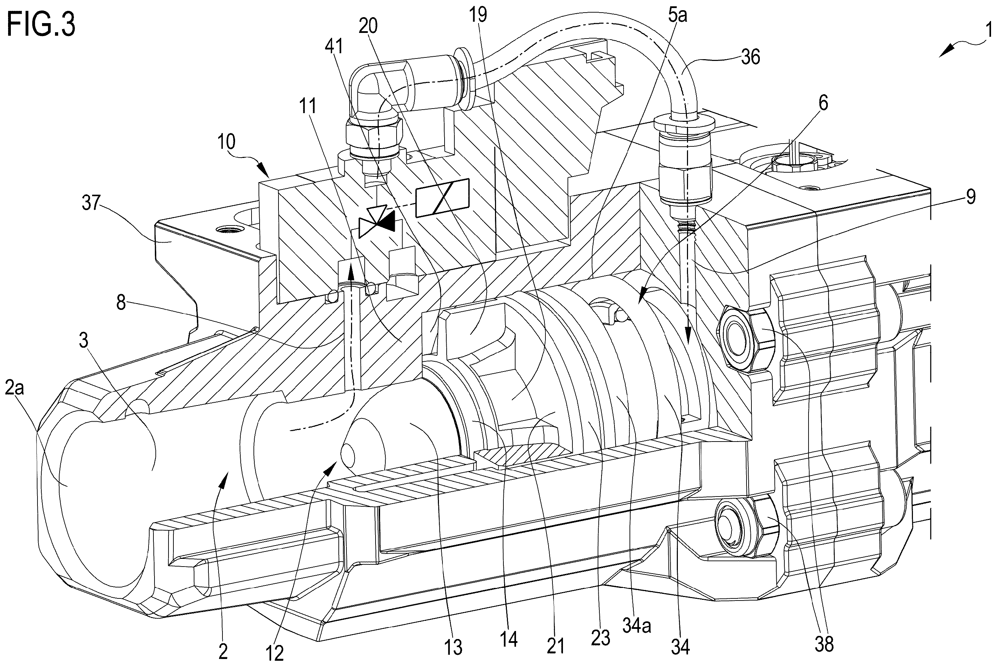

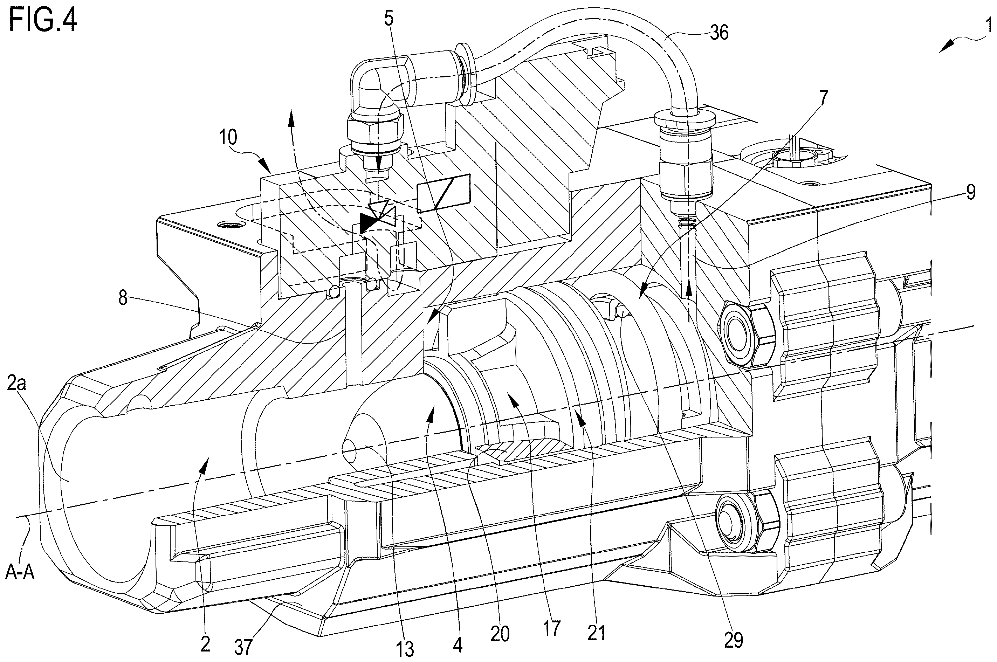

- Figures 3 and 4 each are a partially sectioned perspective view of a further detail of the shut-off valve of Figure 1 in different conditions of use;

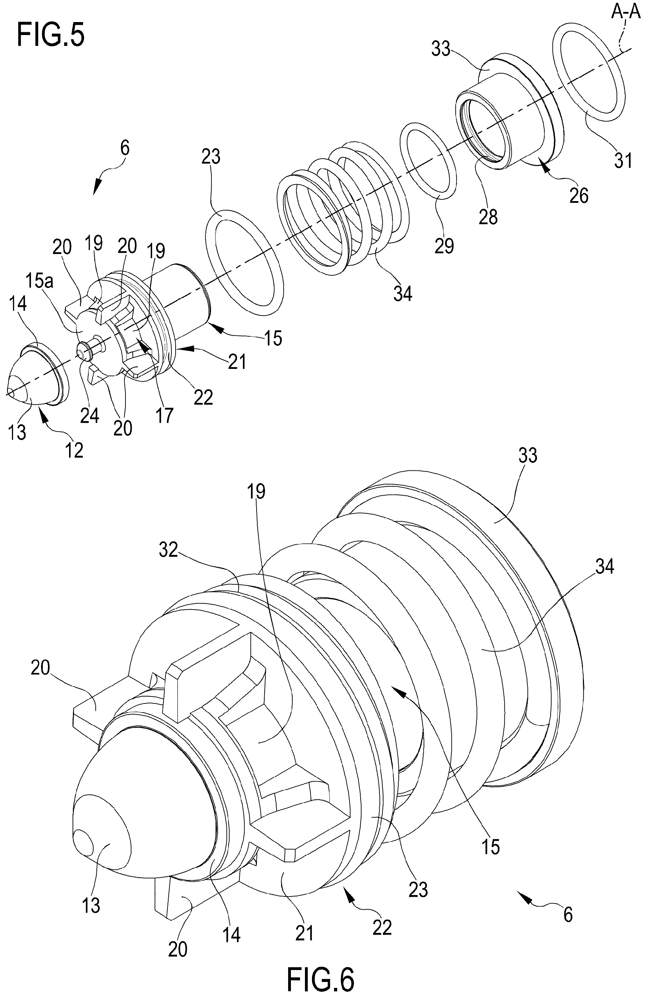

- Figure 5 is an exploded view of a shutter according to the present invention;
- Figure 6 illustrates a perspective view of the shutter of Figure 5; and

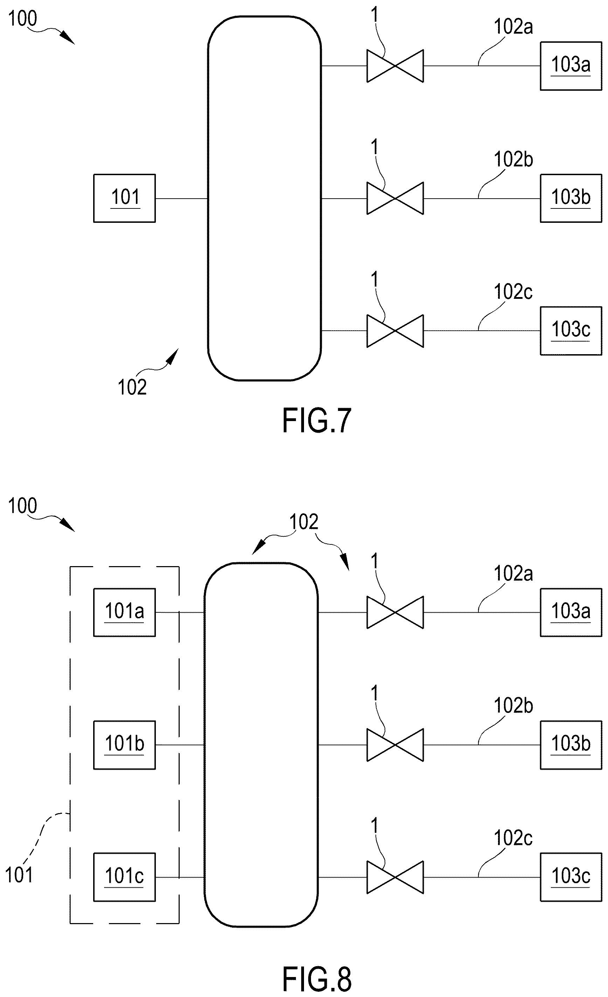

- Figures 7 and 8 schematically represent a respective pressurized-gas distribution circuit with one or more compressors and with various user devices drawing pressurized gas from the circuit.

### Detailed description of the invention

With reference to these figures, a shut-off valve for fluids, for example for air or another pressurized gas, is globally identified by 1. The valve 1 may for example be used in compressed-air distribution circuits (or distribution circuits of another pressurized gas) to control passage of the gas within the system, for example from one or more sources of pressurized gas (optionally one or more gas compressors, such as air compressors) towards one or more user devices.

The shut-off valve 1 comprises a main channel 2 running along a longitudinal axis A-A between an inlet opening 2a and an outlet opening 2b.

In an aspect, the inlet opening 2a is adapted to be coupled to a source of fluid. The fluid may be a gas, such as compressed air, or a liquid, such as water. The main channel 2 is therefore adapted to be fed by the fluid source through the inlet opening 2a. The outlet opening 2b may likewise be adapted to be coupled to an external component so as to supply the latter with the fluid.

The shut-off valve 1 comprises a valve body 37 defining the main channel 2. According to one aspect, the valve body 37 may comprise a first part and a second part removably couplable to one another. In an aspect, the first part and the second part of the valve body 37 are connected to each other through removable connecting means 38. Such connecting means 38 may comprise screws, bolts, nuts or other means known to the person skilled in the art that allow a removable connection.

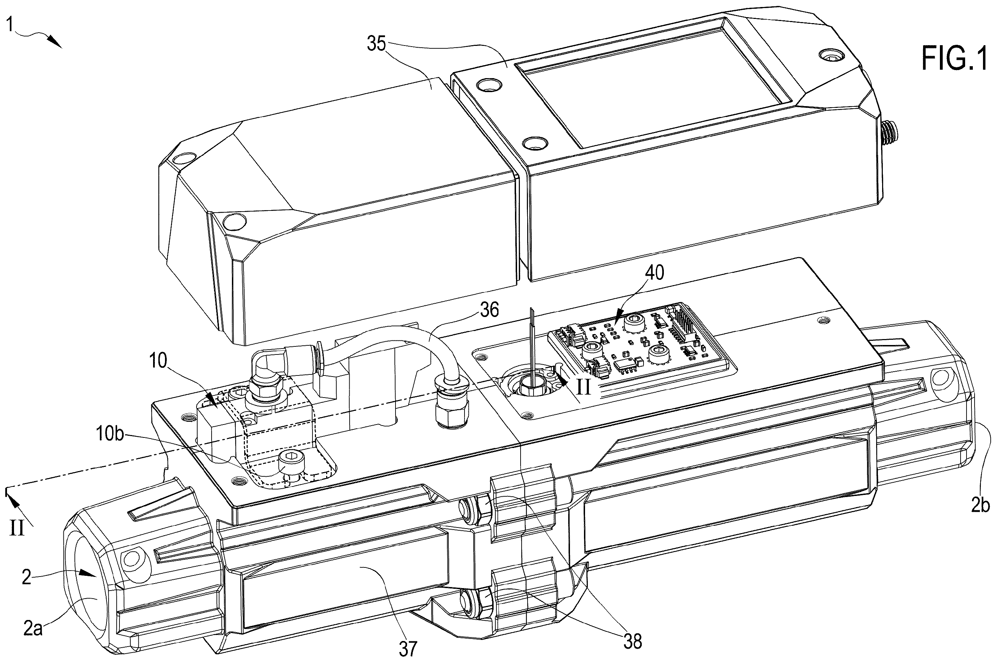

According to one aspect, the first part and the second part of the valve body have slots or seats designed to receive such connecting means 38. For example, in the embodiment shown in Figure 1, the connecting means 38 are arranged in pairs laterally to the first part and to the second part of the valve body 37 and comprise screws and nuts cooperating with each other to fasten the first and second parts to each other. The main channel 2 comprises a first portion 3 and a second portion 5. The first portion 3 extends between the inlet opening 2a and a connecting opening 4. The second portion 5 extends between the connecting opening 4 and the outlet opening 2b. In an aspect, the inlet opening 2a, the outlet opening 2b and the connecting opening 4 are coaxial with one another. The inlet and outlet openings may be provided with coupling means such as, by way of non-limiting example, threads, bayonet systems, interference systems (for example using pins or keys). The connecting opening 4 is adapted to place the first portion 3 and the second portion 5 of the main channel 2 in fluid communication with each other. The connecting opening 4 extends radially from the longitudinal axis A-A. According to one aspect, the connecting opening 4 is circular. In detail, the connecting opening 4 is transverse, preferably perpendicular, to the longitudinal axis A-A. The first portion 3 of the main channel 2 has a respective section perpendicular to the longitudinal axis A-A with radial extension variable along the longitudinal axis A-A. The section of the first portion 3 is for example circular. In an aspect, the section of the first portion 3 has a first radial extent at the inlet opening 2a that is constant for a first stretch of extension. The section of the first portion 3 has a second radial extent, different from the first radial extent, at the connecting opening 4, which is constant for a second stretch of extension along the same longitudinal axis. In an aspect, the first radial extent is greater than the second radial extent. In other words, the main channel 2 narrows (for example defining a radial step between said first and second stretches) along the first portion 3.

It is not excluded, however, that the first portion 3 of the main channel 2 may have a constant section along the longitudinal axis A-A from the inlet opening 2a to the connecting opening 4. It is likewise not excluded that the section variation of the first portion 3 may take place gradually and continuously along the longitudinal axis A-A.

In one embodiment, the second portion 5 of the main channel 2 has a section perpendicular to the longitudinal axis A-A that varies along the longitudinal axis A-A. The section of the second portion 5 is for example likewise circular. It is not excluded that the section of the second portion 5 may have a different conformation and for example be hexagonal, square or rectangular in order to favor coupling of the second portion 5 with a shutter 6.

In an aspect, the section of the second portion 5 has a third radial extent at the connecting opening 4 greater than the second radial extent of the section of the first portion of the main channel. In an aspect, the section of the second portion is constant for a respective third stretch of extension developing along the longitudinal axis A-A. Downstream of the third stretch of extension, proceeding again along the longitudinal axis A-A, the section of the second portion 5 has a fourth radial extent different from the third radial extent. Downstream of the third stretch of extension and proceeding along the longitudinal axis A-A, the radial extent of the section of the second portion 5 first decreases for a fourth stretch of extension (defining a radial step between the third and fourth stretches) and may then optionally increase for a fifth stretch of extension downstream of the fourth stretch of extension and close to the outlet opening 2b.

The shut-off valve 1 comprises a shutter 6. The shutter 6 is arranged in the main channel 2 at the second portion 5 (that is, downstream of the opening 4). In an aspect, the second portion 5 of the main channel 2 is accessible when the first part of the valve body and the second part of the valve body are disconnected from each other and spaced apart. The shutter 6 may therefore be inserted inside the second portion 5 during assembly, when the first and second parts of the valve body are disconnected. In an aspect, the first part of the valve body defines the first portion 3 of the main channel 2 and the stretch of the second portion 5 having a section with constant radial extent.

The shutter 6 is movable along the longitudinal axis A-A. The shutter 6 is at least partly movable relative to the second portion 5 of the main channel 2. The shutter 6 is movable between an open position and a closed position. In the open position the shutter 6 is distanced from the connecting opening 4 and the inlet opening 2a and the outlet opening 2b are in fluid communication with each other. In the closed position the shutter 6 closes the connecting opening 4 and the inlet opening 2a and the outlet opening 2b are isolated from each other. In other words, the shutter 6 engages the connecting opening 4 in the closed position, preventing passage of fluid from the inlet opening to the outlet opening.

According to one aspect, the shutter 6 is axisymmetric. In an aspect, the shutter 6 is symmetrical with respect to the longitudinal axis A-A.

The shut-off valve 1 comprises a chamber 7 delimited at least partly by the shutter 6 and by the second portion 5 of the main channel 2. In an aspect, the chamber 7 is delimited at least by a part of the shutter 6 and by a part 5b of the inner wall 5a of the second portion of the main channel 2 (the surface part 5b extends downstream of the first sealing element 23 described hereinafter). The chamber 7 is interposed between the shutter 6 and said part 5b of the inner wall 5a and is positioned radially outside the shutter 6. Going into further detail, the second portion 5 of the main channel 2 also delimits at least one transfer volume 41, which is positioned immediately downstream of the connecting opening 4 and communicates with the first portion 3 of the main channel 2 when the shutter 6 is in the open position. The transfer volume 41 is isolated from the chamber 7 (thanks, as will be seen hereinafter, to the presence of the first sealing element 23). In use, the fluid fed to the first portion 3 of the main channel 2 (with the shutter in the open position) passes through the connecting opening 4 so as to flow into the transfer volume 41. The transfer volume 41 is therefore in fluid communication with the first portion 3 of the main channel 2 in the open position of the shutter 6 and is isolated from the same first portion 3 when the shutter 6 is in the closed position. As will be further described, the transfer volume 41 is also in fluid communication with the second portion 5 of the main channel.

In addition, the shut-off valve 1 comprises a first passage 8 (for example comprising a duct crossing the wall of the valve body) in fluid communication with the first portion 3 of the main channel 2. The first passage 8 is therefore positioned upstream of the connecting opening 4, with reference to an upstream-downstream direction going from the inlet opening to the outlet opening along the longitudinal axis A-A.

The shut-off valve 1 also comprises a second passage 9 (for example comprising a further duct crossing the wall of the valve body) in fluid communication with the chamber 7. The second passage 9 is positioned downstream of the connecting opening 4 along the longitudinal axis A-A.

The shut-off valve also comprises a selector 10 connected to the first passage 8 and to the second passage 9. The selector 10 is configured to selectively isolate the first passage 8 and the second passage 9 from each other or place the same passages 8, 9 in fluid communication with each other. The selector 10 is arranged externally to the valve body 37. In an aspect, the selector 10 is constrained to the valve body by means of connection elements 10b. Such connection elements 10b may comprise a bracket, screws, bolts or the like. According to one aspect, the selector 10 comprises a main unit fixed to the valve body 37. Such main unit defines a communication channel 36 between the first passage 8 and the second passage 9.

In one embodiment, the shut-off valve 1 comprises a cover 35 removably connected to the valve body 37. The cover 35 is adapted to protect at least the selector 10 and the communication channel 36 from the outside. The cover 35 may be constrained to the valve body by means of screws or the like.

The selector 10 is switchable between an activation configuration and a deactivation configuration. In the activation configuration, the selector 10 isolates the first passage 8 and the second passage 9 from each other. In the deactivation configuration, the selector 10 places the first passage 8 and the second passage 9 in fluid communication with each other. Therefore, in the deactivation configuration, the pressure inside the chamber 7 is equal or substantially equal to the pressure inside the first portion 3 of the main channel 2. According to one aspect, the selector 10 is configured to selectively isolate the first passage 8 and the second passage 9 from each other or place the first passage 8 and the second passage 9 in fluid communication with each other. The selector is configured to normally take said deactivated configuration in the absence of actuating power. The actuating energy may be pneumatic, hydraulic, electric, or of another nature.

In one embodiment, the selector 10 is of the type controlled by a solenoid. In an aspect, in the absence of electrical energization to the solenoid, the selector 10 is normally arranged in the deactivation configuration. Advantageously, the selector 10 is configured automatically to switch into the deactivation configuration, in which the first passage 8 and the second passage 9 are in fluid communication, in the absence of electrical energy and/or in emergency conditions.

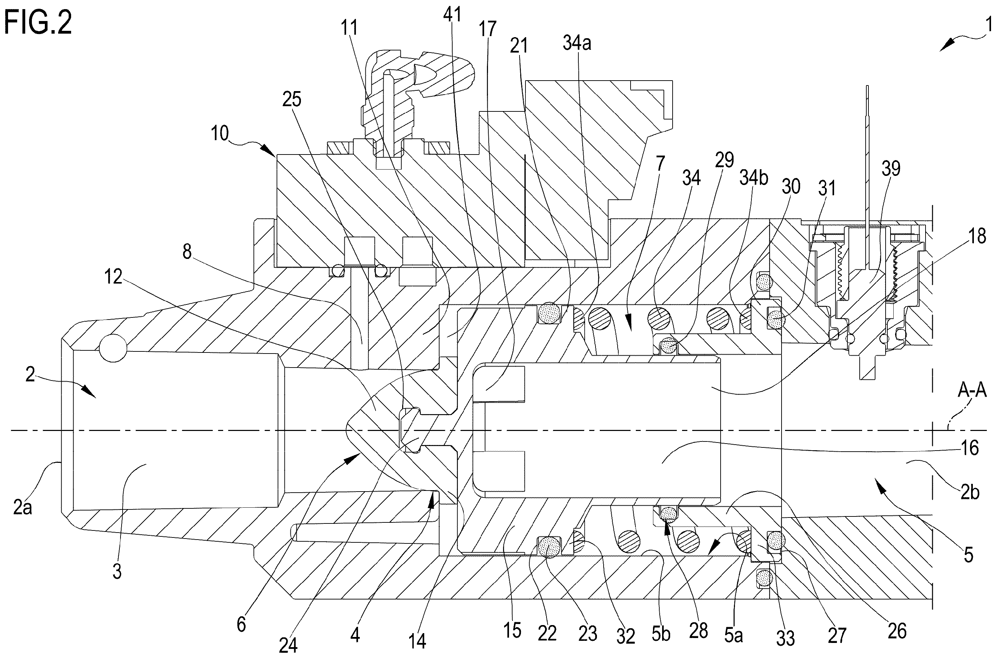

The fluid communication between the first passage 8 and the second passage 9 causes the shutter 6 to be locked in the closed position and therefore prevents and hinders passage of fluid through the main channel. In fact, by placing the first passage 8 and the second passage 9 in fluid communication with each other, the thrust exerted by the fluid in the first portion 3 on the shutter 6 and directed towards the outlet opening 2b (from left to right in Figure 2) is counterbalanced by the thrust exerted by the fluid present in the chamber 7, which opposes displacement of the shutter 6 and is directed towards the inlet opening 2a (from right to left in Figure 2), in addition to the action of an elastic element or spring, as will be described hereinafter.

According to one aspect, the selector 10 is configured to close the first passage 8. In an aspect, in the activation configuration, the selector 10 closes the first passage 8, which then communicates exclusively with the first portion of the main channel, and places the second passage 9 in fluid communication with an environment external to the shut-off valve, thereby establishing a fluid communication between the chamber 7 and such external environment.

In the activation configuration, the selector 10 may be configured to feed a predefined pressure to the second passage 9. For example, the predefined pressure may be 1.5, 2, 2.5 bar or another pressure level. Alternatively, in the activation configuration, the selector may connect the second passage 9 to ambient pressure.

In one embodiment, the main channel 2 comprises a first shoulder 11 at the connecting opening 4. In detail, the main channel 2 has an increase in its passage section at the first shoulder 11.

The shutter 6 is movable towards and away from the first shoulder 11. In the closed position, the shutter 6 abuts against the first shoulder 11, whereas in the open position the shutter 6 is distanced from the first shoulder 11. In an aspect, in the open position of the shutter 6, the space delimited between the shutter 6 and the first shoulder 11 defines the transfer volume 41 through which the fluid fed to the inlet opening 2a flows.

According to one aspect, the shutter 6 comprises a head 12. The head 12 may extend radially from the longitudinal axis A-A. The head 12 is movable along the longitudinal axis A-A, in particular away from and towards the inlet opening 2a. In the closed position of the shutter 6, the head 12 engages and tightly seals the connecting opening 4. In the open position of the shutter, the head 12 disengages the connecting opening 4, allowing fluid to pass through the opening 4 and therefore inside the transfer volume 41.

In one embodiment, the head 12 of the shutter 6 comprises a front portion 13 extending along the longitudinal axis A-A. In the closed position of the shutter 6, the front portion 13 engages the connecting opening 4 while protruding inside the first portion 3 of the main channel 2. In the movement between the closed position and the open position, the front portion 13 retracts relative to the connecting opening 4. For example, the front portion 13 may be entirely arranged inside the second portion of the main channel in the open position. The front portion 13 is configured to intercept the flow of fluid fed to the inlet opening 2a. In an aspect, the front portion 13 is configured to direct radially an incident fluid flow.

According to one aspect, the front portion has an ogive conformation. Such conformation is optimal for directing the fluid flow while reducing the formation of turbulence and pressure losses.

In one embodiment, the head 12 comprises a base 14 that protrudes radially from the front portion 13, defining a perimeter sealing lip. Such base 14 is movable integrally with the front portion 13 along the longitudinal axis A-A. In the closed position, the base 14, and optionally the perimeter sealing lip thereof, abuts against the first shoulder 11. In the open position, the base 14, and optionally the perimeter sealing lip thereof, is at a distance from the first shoulder 11. In an aspect, the base 14 of the head 12 establishes a tight coupling with the first shoulder 11 in the closed position.

According to one aspect, the head 12 is made at least partly of a material suitable for ensuring a tight coupling with the shoulder 11. The head 12 is made wholly or partly of plastic or elastomeric material, for example rubber. The base 14 of the head 12 may be defined by a respective sealing element, such as an annular gasket or O-ring, or may be formed in one piece with the remainder of the head 12.

In one embodiment, the shutter 6 comprises a main body 15 defining an inner channel 16. The inner channel 16 extends radially from the longitudinal axis A-A and longitudinally along the latter between an inlet passage 17 and an outlet passage 18, for example positioned at opposite ends of the main body 15. The inlet passage 17, and therefore the inner channel 16, are in fluid communication with the transfer volume 41 and, when the shutter 6 is in the open position, also with the opening 4 and therefore with the inlet opening 2a. Therefore, with the shutter in the open position, the inlet passage 17 is in fluid communication with the first portion 3 of the main channel 2 through the transfer volume 41 and the opening 4. The outlet passage 18, and therefore the inner channel 16, are on the other hand constantly in fluid communication with the outlet opening 2b of the main channel 2.

The inner channel 16 has a cross section perpendicular to the longitudinal axis A-A, for example circular in shape. The circular section of the inner channel 16 may have a respective radial extent substantially equal to the radial extent of the first portion of the main channel at the connecting opening.

According to one aspect, the main body 15 of the shutter 6 comprises a plurality of radial openings 19 defining the inlet passage 17 of the inner channel 16. The radial openings 19 are arranged angularly spaced apart from one another about the longitudinal axis A-A. Each radial opening 19 is positioned downstream of the base 14 of the head 12 along the longitudinal axis A-A. Each radial opening 19 extends along such longitudinal axis A-A and is adapted to receive the fluid flow directed by the front portion 13 of the head 12. In one embodiment, the main body 15 comprises a plurality of guide elements 20 angularly spaced apart from one another about the longitudinal axis A-A. Each guide element 20 extends parallel to the longitudinal axis A-A. Each guide element 20 also extends radially relative to the same longitudinal axis A-A. In detail, each radial opening 19 is arranged between two adjacent guide elements 20 and extends circumferentially at a predetermined distance from the longitudinal axis A-A. In an aspect, each guide element 20 is configured to direct an incident fluid flow towards one or more of the radial openings 19. Each guide element 20 may be conformed as a blade oriented parallel to the longitudinal axis A-A.

When the shutter 6 is in the open position, the fluid flow from the inlet opening 2a is, in succession, directed:
- from the first portion 3 towards the connecting opening 4,
- in a radial direction by the front portion 13 and the base 14, towards the transfer volume 41,
- then inside the transfer volume 41 of the second portion 5 of the main channel 2,
- towards the radial openings 19 and inside the inner channel 16 by the guide elements 20,
- towards the outlet passage 18 by the main body 15,
- towards the outlet opening 2b by the second portion 5.

In one embodiment, the main body 15 comprises an annular flange 21 projecting radially towards the inner wall 5a of the second portion 5 of the main channel 2. The main body 15 and the inner wall 5a delimit the chamber 7 at least partly. The annular flange 21 has a radial extent greater than a radial extent of the head 12.

Advantageously, the flange 21 provides a greater contact surface with the fluid flow, so that movement of the shutter 6 from the closed position to the open position takes place efficiently and rapidly, as soon as the shutter allows passage of fluid. In fact, once the movement of the shutter 6 away from the connecting opening 4 has begun, the fluid flow will also impinge on the surface of the annular flange 21 and no longer only on the head 12 as in the closed position.

In an aspect, the inner volume of the chamber 7 decreases in the movement of the shutter 6 from the closed position to the open position and increases in the movement of the shutter 6 from the open position to the closed position. In other words, the dimensions of the chamber 7 vary according to the relative position between the shutter 6 and the connecting opening 4. In turn, the transfer volume 41 delimited between a part of the inner wall 5a of the second portion 5 of the main channel 2 decreases in the movement of the shutter 6 from the open position to the closed position and increases in the movement of the shutter 6 from the closed position to the open position.

In one embodiment, the annular flange 21 delimits a first annular seat 22. The shutter 6 comprises a first sealing element 23, for example a first O-ring, constrained in the first annular seat 22. The first sealing element 23 is configured to determine, at the annular flange 21, a tight sliding coupling between the shutter 6 and the inner wall 5a of the second portion 5 of the main channel 2. As already mentioned, the first sealing element 23 is configured to isolate the chamber 7 from the transfer volume 41.

In one embodiment, the main body 15 of the shutter 6 is constrained to the head 12. The main body 15 and the head 12 are integral in movement along the longitudinal axis A-A. The head 12 may be removably connected to the main body 15 so as to allow maintenance of the head 12 or its replacement with a spare head.

According to one aspect, the main body 15 comprises a front supporting wall 15a extending radially, optionally perpendicularly, relative to the longitudinal axis A-A. In detail, a radial extent of the front supporting wall 15a is smaller than the radial extent of the annular flange 21. The main body 15 is constrained to the head 12 at the front supporting wall 15a. The base 14 of the head 12 adheres to the front supporting wall 15a.

In one embodiment, the main body 15 comprises a connecting element 24 emerging from the front supporting wall 15a along the longitudinal axis A-A. The main body 15 and the head 12 are constrained to each other by means of the connecting element 24. In an aspect, the connection between the head 12 and the main body 15 may be of the snap-fit type.

In an aspect, the base 14 of the head 12 comprises a housing 25 configured to receive and constrain the connecting element 24. The connecting element 24 is constrained in the housing 25. The connecting element 24 in turn comprises a stem and a distal expansion, carried by the stem and having a radial overall dimension greater than that of the stem itself, intended to snap into a seat with undercut present in the head 12 of the shutter 6. Such stem advantageously makes it possible to reduce the possibility of undesired removal of the head 12 from the main body 15.

In one embodiment, the shutter 6 comprises a guiding body 26 constrained to the second portion 5 of the main channel 2. The guiding body 26 is slidingly connected to the main body 15. In detail, the guiding body 26 is fitted on the main body 15 and is designed to guide movement of the main body 15 along the longitudinal axis A-A. The guiding body 26 makes it possible to keep the main body 15 centered with respect to the longitudinal axis A-A.

According to one aspect, the guiding body 26 contacts the inner wall 5a of the second portion 5 of the main channel 2 and cooperates in delimiting the chamber 7 at least partly. In an aspect, the chamber 7 is delimited by the main body 15, by a portion of the inner wall 5a of the second portion 5 of the main channel 2 and by the guiding body 26.

The main channel 2 comprises a second shoulder 27 axially spaced apart from the first shoulder 11. At the second shoulder 27, the main channel 2 has a reduction in its passage section, thereby defining a transition between an upstream stretch and a downstream stretch of the second portion 5 of the main channel 2. In detail, the first shoulder 11 and the second shoulder 27 face each other. The guiding body 26 of the shutter 6 is constrained to the main channel 2 at the second shoulder 27. Relative movement between the guiding body 26 and the second portion 5 of the main channel 2 is prevented by the second shoulder 27.

The guiding body 26 comprises a second annular seat 28 facing the main body 15. The second annular seat 28 is positioned radially spaced apart from the longitudinal axis A-A. The shutter 6 comprises a second sealing element 29, optionally a second O-ring. Such second sealing element 29 is constrained in the second annular seat 28. In an aspect, the second sealing element 29 is configured to determine a tight sliding coupling between the main body 15 and the guiding body 26. In other words, the second sealing element 29 prevents fluid from flowing between the main body 15 and the guiding body 26 towards the chamber 7.

In one embodiment, the guiding body 26 comprises a third annular seat 30 facing the second shoulder 27 of the second portion 5 of the main channel 2. The shutter 6 comprises a third sealing element 31, optionally a third O-ring. Such third sealing element 31 is constrained in the third annular seat 30, projecting at least partly therefrom. In an aspect, the third sealing element 31 is configured to determine a tight coupling between the guiding body 26 and the second shoulder 27 of the second portion 5. The third sealing element 31 prevents fluid from passing between the guiding body 26 and the second shoulder 27.

According to one aspect, one or more of the first sealing element 23, the second sealing element 29 and the third sealing element 31 are of the O-ring gasket type. In this embodiment, the chamber 7 is delimited by a portion of the outer surface of the main body 15, by a portion of the inner wall 5a extending between the first and third sealing elements 23, 31, and by the guiding body 26.

In one embodiment, the main body 15 and the guiding body 26 respectively comprise a first and a second annular abutment surface 32, 33 transverse to the longitudinal axis A-A and facing each other. In an aspect, the first annular abutment surface 32 is defined by the annular flange 21.

According to one aspect, the shutter 6 comprises an elastic element 34 disposed between the first annular abutment surface 32 and the second annular abutment surface 33. In detail, the elastic element 34 is pre-compressed and designed to exert an elastic pushing force on the main body 15 directed along or parallel to the longitudinal axis A-A and oriented to push the shutter 6, optionally the head 12 of the shutter 6, into closure of the connecting opening 4. The elastic element 34 is configured to favor movement of the shutter from the open position to the closed position. The elastic force is directed parallel to the longitudinal axis A-A towards the inlet opening 2a.

According to one aspect, the elastic element 34 extends along the longitudinal axis A-A between an end 34a and an opposite end 34b and may comprise one or more helical springs, for example fitted around the main body 15. The end 34a is constrained to the first annular abutment surface 32 and the opposite end 34b is constrained to the second annular abutment surface 33. The elastic element 34 is positioned inside the chamber 7. In detail, the elastic element 34 compresses in the movement of the shutter 6 from the closed position to the open position and extends in the movement of the shutter 6 from the open position to the closed position.

In the activation configuration of the selector 10, in order to cause movement of the shutter 6 from the closed position to the open position, a force exerted by the fluid fed to the inlet opening 2a on the head 12 of the shutter must be greater than the elastic force exerted by the elastic element 34.

According to one aspect, the shut-off valve 1 may comprise a battery for storing electrical energy.

According to a further aspect, the main channel, from the inlet opening to the outlet opening, has a strongly elongated conformation and an overall longitudinal extent at least equal to 4 times, for example 5 or 6 or 7 or 8 times, the maximum radial extent of the inlet opening or of the outlet opening. In one embodiment, the valve comprises power supply means configured to receive electrical energy from the battery and/or from an electrical network. Such power supply means are electrically connected to the selector 10 in order to supply electrical energy thereto.

According to an aspect, a downstream stretch of the second portion 5 of the main channel 2 accommodates a predetermined number of transducer elements 39 of related sensors. Such predetermined number of transducer elements 39 comprises one or more of the following:
- a pressure transducer,
- a temperature transducer,
- a humidity transducer,
- a flow transducer.

Each of such transducers is connected with an electronic control board 40 supported by or housed in the valve body 37.

According to a further aspect, said one or more transducer elements operate at a significant distance from the opening 4, so that the fluid flow is given sufficient space to stabilize and minimize turbulence. In an aspect, the section in which the transducer elements operate is at a distance from the section where the opening 4 is defined (that is, from the shoulder 11) that is at least 2, preferably at least 3 or at least 4 times the diameter (or the maximum radial measure) of the opening 4.

According to a further optional aspect of the present invention, no flow straighteners are present downstream of the shutter, and optionally between the shutter and the transducer elements 39.

The present invention also relates to a pneumatic circuit 100 comprising:
- a pressurized gas source 101,
- a gas distribution circuit 102 configured to be placed in fluid communication with the gas supply source 101,
- a predetermined number of user devices 103a, 103b, 103c each configured to be placed in fluid communication with at least one respective gas supply line 102a, 102b, 102c forming part of the distribution circuit 102, and
- a shut-off valve 1 according to any of the embodiments described, interposed between each gas supply line 102a, 102b, 102c and the respective user device 103a, 103b, 103c.

The pressurized gas source 101 may comprise a predetermined number of compressors 101a, 101b, 101c. For example, each compressor may be connected to a respective user device through a respective gas supply line.

The present invention also relates to the shutter 6 according to the present description.

The present invention lends itself to numerous variants that may be implemented by a person skilled in the art and all fall within the scope of protection defined by the following claims. For example, although the valve 1 has been described with a downstream stretch of the second portion 5 of the channel 2 provided with one or more transducers, such stretch of the portion 5 may alternatively be formed by a simple bushing devoid of transducers. Moreover, the selector described above as a solenoid valve could be a manually actuated selector.

## Claims

1. Shut-off valve (1), particularly for shutting off pressurized gas, comprising:
- a main channel (2) running along a longitudinal axis (A-A) between an inlet opening (2a) and an outlet opening (2b), the main channel (2) comprising:
∘ a first portion (3) extending between the inlet opening (2a) and a connecting opening (4),
∘ a second portion (5) extending between the connecting opening (4) and the outlet opening (2b),
- a shutter (6) arranged in the main channel (2) at the second portion (5), the shutter (6) being movable along the longitudinal axis (A-A) between:
∘ an open position, wherein the shutter (6) is distanced from the connecting opening (4) and wherein the inlet opening (2a) and outlet opening (2b) are in fluid communication with each other, and
∘ a closed position, wherein the shutter (6) closes the connecting opening (4) and wherein the inlet opening (2a) and outlet opening (2b) are isolated from each other,
- a chamber (7) delimited at least by part of the shutter (6) and part of the second portion (5) of the main channel (2),
- a first passage (8) in fluid communication with the first portion (3) of the main channel (2),
- a second passage (9) in fluid communication with the chamber (7),
- a selector (10) operationally associated with the first passage (8) and the second passage (9) and switchable between:
∘ an activation configuration, wherein the selector (10) isolates the first passage (8) and the second passage (9) from each other, and
∘ a deactivation configuration, wherein the selector (10) allows a fluid communication between the first passage (8) and the second passage (9).

2. Shut-off valve (1) according to the preceding claim, wherein in the activation configuration, the selector (10) closes the first passage (8) which then communicates exclusively with the first portion of the main channel (2) and places the second passage (9) in fluid communication with an environment external to the shut-off valve thereby realizing a fluid communication between said chamber (7) and said external environment, optionally wherein the environment external to the valve is at a predefined pressure or at atmospheric pressure.

3. Shut-off valve (1) according to any one of the preceding claims, wherein the main channel (2) comprises a first shoulder (11) at the connecting opening (4), wherein the main channel (2) has an increase in its passage section at the first shoulder (11), and
wherein the shutter (6) comprises a head (12) movable along the longitudinal axis (A-A), and wherein:
in the closed position, the shutter (6) abuts against the first shoulder (11) and the head (12) engages and tightly seals the connecting opening (4), and
in the open position, the shutter (6) is distanced from the first shoulder (11), and the head (12) disengages the connecting opening (4) allowing fluid to flow through it.

4. Shut-off valve (1) according to the preceding claim, wherein the head (12) of the shutter (6) comprises:
- a front portion (13) extending along the longitudinal axis (A-A), wherein in the closed position of the shutter (6) the front portion (13) engages the connecting opening (4) and protrudes inside the first portion (3) of the main channel (2), optionally wherein the front portion (13) of the head (12) has an ogive conformation, and
- a base (14) that protrudes radially from the front portion (13) defining a perimeter sealing lip, and wherein:
∘ in the closed position, the base (14), and optionally the perimeter sealing lip of the same, abuts against the first shoulder (11), and
∘ in the open position, the base (14), and optionally the perimeter sealing lip of it, is at a distance from the first shoulder (11).

5. Shut-off valve (1) according to any one of the preceding claims, wherein the shutter (6) comprises a main body (15) defining an inner channel (16) extending radially from the longitudinal axis (A-A) and along the latter between an inlet passage (17) and an outlet passage (18),
wherein the inlet passage (17), when the shutter (6) is in the open position, is in fluid communication with a transfer volume (41) of the second portion (5) of the main channel (2) and with the connecting opening (4),
wherein the transfer volume (41) is positioned downstream the connecting opening (4) and is isolated from the chamber (7),
and wherein the outlet passage (18) is constantly in fluid communication with the outlet opening (2b) of the main channel (2), and
wherein the main body (15) comprises:
a plurality of radial openings (19) arranged angularly spaced apart from each other about the longitudinal axis (A-A), the inlet passage (17) of the inner channel (16) being defined by the plurality of radial openings (19), and
a plurality of guide elements (20) angularly spaced apart from each other about the longitudinal axis (A-A), each guide element (20) extending along or parallel to the longitudinal axis (A-A) and radially relative to the latter, each radial opening (19) being located between two adjacent guide elements (20) and extending circumferentially at a predetermined distance from the longitudinal axis, each guiding element (20) being configured to direct a flow of incident fluid towards one of said radial openings (19), optionally wherein each guiding element (20) is conformed to a blade oriented parallel to the longitudinal axis (A-A).

6. Shut-off valve (1) according to the preceding claim, wherein the main body (15) comprises an annular flange (21) radially projecting towards the inner wall (5a) of the second portion (5) of the main channel (2), the main body (15) and the inner wall (5a) boundering at least partially the chamber (7), wherein an inner volume of the chamber (7) decreases in the movement of the shutter (6) from the closed position to the open position and increases in the movement of the shutter (6) from the open position to the closed position, and wherein the annular flange (21) delimits a first annular seat (22), the shutter (6) comprising a first sealing element (23), optionally a first O-ring, constrained in the first annular seat (22), the first sealing element (23) being configured to determine at the annular flange (21) a tight sliding coupling between the shutter (6) and the inner wall (5a) of the second portion (5) of the main channel (2).

7. Shut-off valve (1) according to claim 5 or 6 when dependent on claim 4, wherein the main body (15) comprises:
a front supporting wall (15a) extending radially, optionally perpendicularly, to the longitudinal axis (A-A), the main body (15) being constrained to the head (12) at the front supporting wall (15a),
a connecting element (24) emerging from the front supporting wall (15a) along the longitudinal axis (A-A), the base (14) of the head (12) comprising a housing (25) configured to receive and constrain the connecting element (24), optionally wherein the connecting element (24) comprises a stem and a distal expansion, carried by the stem and having a radial dimension greater than that of the stem itself, intended to snap into a seat with undercut present in said head (12) of the shutter (6).

8. Shut-off valve (1) according to any one of the preceding claims 5 to 7 when dependent on claim 3 or 4, wherein the shutter (6) comprises a guiding body (26) constrained to the second portion (5) of the main channel (2) and slidingly connected to the main body (15), the guiding body (26) being fitted on the main body (15) and designed to guide the movement of the main body (15) along the longitudinal axis (A-A), and wherein the guiding body (26) contacts the inner wall (5a) of the second portion (5) of the main channel (2) and cooperates in delimiting at least partially the chamber (7), optionally wherein the chamber (7) is delimited by the main body (15), a part of the inner wall (5a) of the second portion (5) of the main channel (2) and the guiding body (26), and
wherein the main channel (2) comprises a second shoulder (27) axially spaced apart from the first shoulder (11), and wherein at the second shoulder (27) the main channel (2) has a reduction in its passage section defining a transition between an upstream section and a downstream section of the second portion (5) of the main channel (2), the guiding body (26) being constrained to the main channel (2) at the second shoulder (27).

9. Shut-off valve (1) according to the preceding claim, wherein:
the guiding body (26) comprises a second annular seat (28) facing the main body (15), the shutter (6) comprising a second sealing element (29), optionally a second O-ring, constrained in the second annular seat (28), the second sealing element (29) being configured to determine a tight sliding coupling between the main body (15) and the guiding body (26), and/or
the guiding body (26) comprising a third annular seat (30) facing the second shoulder (27) of the second portion (5) of the main channel (2), the shutter (6) comprising a third sealing element (31), optionally a third O-ring, constrained in the third annular seat (30) projecting at least partially from the latter, the third sealing element (31) being configured to determine tight coupling between the guiding body (26) and the second shoulder (27) of the second portion (5).

10. Shut-off valve (1) according to claim 8 or 9, wherein the main body (15) and the guiding body (26) respectively comprise a first and a second annular abutment surface (32, 33) transverse to said longitudinal axis (A-A) and facing each other, said shutter (6) comprising an elastic element (34) disposed between said first and second annular abutment surfaces (32, 33), the elastic element (34) being pre-compressed and designed to exert an elastic pushing force on the main body (15) directed along or parallel to said longitudinal axis (A-A) and oriented to push the shutter (6), optionally a/the head (12) of the shutter (6), in closing the connecting opening (4), optionally wherein the first annular abutment surface (32) is defined by the annular flange (21), and
wherein the elastic element (34) extends along the longitudinal axis (A-A) between an end (34a) constrained to the first annular abutment surface (32) and an opposite end (34b) constrained to the second annular abutment surface (33), the elastic element (34) compressing in the movement of the shutter (6) from the closed position to the open position and extending in the movement of the shutter (6) from the open position to the closed position, optionally the elastic element (34) being placed inside the chamber (7).

11. Shut-off valve (1) according to any one of the preceding claims, wherein the selector (10) is configured to selectively isolate from each other or place in fluid communication with each other the first passage (8) and the second passage (9), and
wherein the selector (10) is of the type configured to normally assume said deactivated configuration in the absence of actuating energy.

12. Shut-off valve according to claim 11, wherein the selector is controlled by a solenoid and in the absence of electrical energization to the solenoid is normally arranged in said deactivation configuration, optionally wherein the solenoid comprises a main unit fixed to a valve body (37) and defining a communication channel (36) between the first passage (8) and the second passage (9).

13. Shut-off valve (1) according to any one of the preceding claims, wherein a downstream section of the second portion (5) of the main channel (2) accommodates a predetermined number of transducer elements of related sensors, optionally wherein said predetermined number of transducer elements comprises one or more of the following:
- a pressure transducer,
- a temperature transducer,
- a humidity transducer,
- a flow transducer,
wherein each of said transducers is connected with an electronic control board carried from or housed in the valve body (37),
optionally wherein:
- said one or more transducer elements operate at a distance from the connecting aperture (4) that is at least 2 times, more optionally 3 to 10 times, the diameter or maximum radial extent of the connecting aperture (4) and
- there are no flow straighteners between the shutter (6) and the transducer elements (39).

14. Shut-off valve (1) according to any one of the preceding claims, wherein the main channel from the inlet opening to the outlet opening has strongly elongated conformation and overall longitudinal extension of at least 4 times, e.g., 5 to 10 times, the maximum radial extension of the inlet opening,
wherein there are no flow straighteners downstream of the shutter (6), and
wherein the inlet opening (2a), the outlet opening (2b), and the connecting opening (4) are coaxial with each other.

15. Pneumatic circuit (100) comprising:
- a pressurized gas source (101), optionally comprising a predetermined number of compressors (101a, 101b, 101c),
- a gas distribution circuit (102) configured to be placed in fluid communication with the gas supply source (101),
- a predetermined number of user devices (103a, 103b, 103c) each configured to be placed in fluid communication with at least one respective gas supply line (102a, 102b, 102c) forming part of the distribution circuit (102), and
- a shut-off valve (1) according to any one of the preceding claims interposed between each gas supply line (102a, 102b, 102c) and the respective user device (103a, 103b).
